# EUROPEAN PATENT SPECIFICATION

(11) **EP 0 667 369 B1**
(45) Date of publication and mention of the grant of the patent: **12.06.2002**
(21) Application number: 95101020.6
(22) Date of filing: 26.01.1995
(51) Int. Cl.: C08J 9/12, C08J 9/228

(54) **Expanded articles of biodegradable plastic material and a process for the preparation thereof**
Schaumkörper von biologisch abbaubaren Kunststoffmaterialien und Verfahren zu ihrer Herstellung
Corps expansés de matières plastiques biodégradables et procédé pour leur préparation

(30) Priority: 09.02.1994 IT MI940228
(43) Date of publication of application: 16.08.1995
(60) Divisional application: 99121109.5
(73) Proprietor: NOVAMONT S.p.A., 28100 Novara (IT)
(72) Inventor: Bastioli, Catia, I-28100 Novara (IT); Bellotti, Vittorio, I-28010 Fontaneto d'Agogna (NO) (IT); Del Tredici, Gianfranco, I-21018 Sesto Calende (VA) (IT); Rallis, Angelos, I-28100 Novara (IT)
(74) Representative: Rambelli, Paolo

(56) References cited:
- WO-A-91/02023
- WO-A-92/08759
- WO-A-92/14782
- DE-C- 4 236 717
- JP-B- 51 019 868

## Description

The present invention relates to foamed articles made of a biodegradable plastic material and to the process for preparing them.

In the sector of foamed materials, used, in particular, for protective packages, the need is felt to a higher and higher extent, for replacing foamed polystyrene with materials which meet the more and more stringent biodegradability requirements.

For that purpose, the use of starch-based materials was proposed in the past.

European patent application EP-A-0 087 847 discloses a process for preparing starch-based foamed articles, by heating starch or starch containing materials, in an extruder press in the presence of 10-30 % of water, by weight, and of a foaming agent, followed by extrusion.

European patent application EP-A-0 375 831 discloses foamed articles constituted by high-amylose starch, which display good mechanical and closed-cell-structure characteristics. These foamed articles are prepared by extrusion in the presence of water, at a temperature comprised within the range of from 150 to 250 °C, possibly followed by a thermo-forming treatment.

International patent application published with No. WO 91/02023 discloses foamed articles of biodegradable plastic material, prepared by extruding a starch containing composition and a synthetic polymer selected from ethylene, vinyl alcohol and ethylene-acrylic acid copolymers, in the presence of a polymeric acid and sodium hydrogen carbonate as the foaming agent.

JP-B-5101968 describes a process for preparing expanded particles of starch which are coated with a film of a thermoplastic polymer and are then heated under pressure in a mould, to obtain a shaped article, wherein the solvent used for dissolving the thermoplastic polymer is an organic solvent.

However, by operating according to the methods known from the prior art, preparing foamed articles having complex shapes and high thicknesses, is a difficult task. Furthermore, the resulting foamed articles in general do not display a satisfactory stability.

DE-C-4236717 describes foamed articles obtained by agglomeration of foamed particles formed of starch or starch containing polyvinyl alcohol, treated in a mold with hot air containing less than 5% of residual humidity.

The purpose of the present invention is to provide foamed articles of biodegradable plastic material which do not display the drawbacks affecting the prior art, and are endowed with good mechanical characteristics, in particular good resilience and compressibility.

The subject matter of the invention is defined by the appended claims. The foamed material of the invention is made of a biodegradable plastic material and is constituted by agglomerated foamed particles having a density comprised within the range of from 0.1 to 0.003 g/cm³ and a size comprised within the range of from 0.5 to 10 mm of diameter, which particles are constituted by a material comprising:
- from 50 to 95%, preferably from 60 to 95%, by weight, of thermoplastic starch,
- from 0.5 to 45%, preferably from 2 to 35%, by weight, of at least one thermoplastic polymer other than starch, and
- from 2 to 20%, preferably from 5 to 17%, by weight, of water.

The foamed particles which constitute the foamed articles of the present invention have a density preferably comprised within the range of from 0.06 to 0.005 g/cm³, and a size preferably comprised within the range of from 1 to 5 mm.

Said foamed particles have a closed-cell structure. They can have different shapes and, in particular, a substantially spherical shape.

The presence of one or more thermoplastics polymers in the composition of the above said foamed particles makes it possible the melt strength of the composition to be improved, with foamed articles being obtained which are endowed with good resilience and low moisture sensitivity.

The thermoplastic starch which can be used as a component for said foamed particles can be a native starch, preferably corn starch or potato starch, or high-amylose starch grades, preferably containing more than 30% amylose, and waxy starch grades.

Furthermore, physically and chemically modified starches can be used, such as ethoxylated starches, oxypropylated starches, acetate starches, butyrate starches, propionate starches with a substitution degree comprised within the range of from 0.1 to 2, cationic starches, oxidized starches, crosslinked starches, gelated starches, starch complexed with polymer capable of yielding "V"-type complexes, e.g., with ethylene-vinyl alcohol (EVOH), ethylene-acrylic acid (EAA), ethylene-maleic anhydride copolymers, ethylene-ethyl acrylate-maleic anhydride ter-polymers, grafted starches, degraded starches, destructured starches.

Native starch is normally used without submitting it to any preliminary dehydration, with its water content of approximately 9-16% by weight.

The thermoplastic polymer which can be used as components of foamed particles are selected from:
i. Polymer from natural origin, either modified or non-modified, in particular cellulose derivatives, as cellulose acetate, cellulose butyrate with a substitution degree comprised within the range of from 1 to 2.5, possibly plasticized, alkyl celluloses, hydroxy alkyl celluloses, carboxy alkyl cellulose, in particular methyl cellulose, and, furthermore, chitosan, pullulan or casein and caseinates;
ii. Biodegradable polymers of synthetic origin, or obtained by fermentation, in particular polyesters, as homo-and copolymers of aliphatic C₂-C₂₄ hydroxy acids, or the corresponding lactones or lactides thereof, and furthermore polyesters derived from difunctional acids and aliphatic diols, such as, e.g.:
   - poly(epsilon-caprolactone), or its graft or block copolymers, the reaction products of caprolactone oligomers or polymers with aromatic or aliphatic isocyanates,
   - lactic acid of lactide polymers, glycolic acid or polyglicolide polymers, lactic acid and glycolic acid copolymers,
   - polyhydroxybutyrate or polyhydroxybutyrate-valerate,
   - polyalkylene succinates and, in particular, polyethylene- or polybutylene succinate, polyethylene- or polybutylene adipate, polyethylene- or polybutylene sebacate, polyethylene- or polybutylene azelate, polyethylene- or polybutylene brassilate and copolymers thereof, possibly copolymerized with aliphatic or aromatic isocynates, possibly with their molecular weight being increased by means of chain extenders;
iii. Polymers capable of forming "V" type complexes with amylose, or polymers containing hydrophilic groups intercalated with hydrophobic sequences, such as:
   - ethylene-vinyl alcohol copolymers containing up to 50% by weight, preferably 10-44% by weight, of ethylene units, oxidised ethylene-vinyl alcohol copolymers, or ethylene-vinyl alcohol copolymers terminated with fatty acids, or grafted with polycaprolactone, or modified with acrylic of methacrylic monomers and/or pyridinium,
   - ethylene-vinyl acetate copolymers, which may also be partially hydrolysed,
   - ethylene-acrylic esters copolymers,
   - ethylene-acrylic esters-maleic anhydride or ethylene-vinyl acetate-glycidyl methacrylate terpolymers,
   - ethylene copolymers with unsaturated acids, such as acrylic acid, methacrylic acid, crotonic acid, itaconic acid, maleic anhydride, and so forth, in particular ethylene-acrylic acid copolymers containing 5-50 %, by mol, and preferably 10-30%, by mol, of units derived from acrylic acid,
   - ethylene termopolymer with vinyl acetate, which may be either totally or partially hydrolysed, with acrylic or methacrylic or crotonic or itaconic acid,
   - aliphatic 6-6, 6-9 or 12 polyamides, aliphatic polyurethanes, random or block polyurethane-polyamide, polyurethane-polyester, polyurethane-polyether, polyamide-polyester, polyamide-polyether, polyester-polyether copolymers;
iv. Polymers capable of forming hydrogen bonds with starch, in particular poly(vinyl alcohol) in various hydrolysis degrees, possibly modified with acrylates or methacrylates, poly(vinyl alcohol) previously plasticized or modified in order to reduce the melting point thereof, possibly containing gelling agents, as boric acid, borates or phosphates, vinyl acetate copolymers (in various hydrolysis degrees) with vinylpyrrolidone or styrene, polyethyloxazolines, polyvinylpyridine.

Preferred thermoplastic polymers are poly(vinyl alcohol), the copolymers of an olefinic monomer, preferably ethylene, with a monomer selected from vinyl alcohol, vinyl acetate, acrylic acid and methacrylic acid, aliphatic polyesters, such as polycaprolactone, poly(butylene succinate) and their copolymers, and aliphatic polyamides.

The foamed particles which constitute the foamed articles of the present invention preferably contain a nucleation agent.

The amount of such a nucleation agent in the foamed material is comprised within the range of from 0.005 to 5% by weight, preferably of from 0.05 to 3% by weight, still more preferably of from 0.2 to 2% by weight.

Useable nucleation agents are, e.g., inorganic compounds, as talc (magnesium silicate), calcium carbonate, and so forth, possibly previously as silanes, titanates, and so forth. Furthermore, organic fillers can be used, as yeast shells from sugar beet processing, dried, ground and powdered sugar beet flesh, wood powder, cellulose powder, and so forth.

The nucleation agent can be added to the mixture used to prepare the foamed particles, or, alternatively, it can be added to the foamed particles as a masterbatch. In the latter case the masterbatch can contain from 10 to 50% of one or more fillers.

The foamed particles can furthermore contain one or more slip agent (s) and/or dispersants having a hydrophile/lipophile balance index ("HLB") comprised within the range of from 3 to 25, preferably comprised within the range of from 6 to 20. When used, these agents can be present in amounts comprised within the range of from 0.01 to 5% by weight, preferably of from 0.1 to 3% by weight.

The foamed particles can also contain one or more plasticizer(s). When used, said plasticizes can be present in amounts comprised within the range of from 0.5 to 20% by weight, preferably of from 0.5 to 5.0% by weight.

Useable plasticizes are, e.g., those as disclosed in published International Patent Application Publ. No. WO 92/14782, the content of which is incorporated to the present disclosure. Particularly suitable for use as plasticizes are glycerol, sorbitol, mannitol, erythritol, low molecular weight poly(vinyl alcohol), their oxyethylated and oxypropylated derivatives, and, furthermore, urea.

Furthermore, the foamed particles can contain one or more flame retardant(s), which can be added to the mixture used in order to prepare the foamed particles or, alternatively, can be added to the foamed particles as a masterbatch, in particular in combination with the nucleating agent.

When they are used, said flame retardants are present in amounts comprised within the range of from 0.1 to 20% by weight, preferably of from 1 to 10% by weight, still more preferably of from 2 to 5% by weight.

The flame retardants which can be selected from those derived from phosphorus containing, sulfur containing or halogenated products. For example, triphenyl phosphate, tributyl phosphate, tricresyl phosphate, tributoxyphenyl phosphate, melamine pyrophosphate, ammonium polyphosphate, ethylene diamine, ammonium polyphosphate, guanidinium phosphate, tetrabromophthalic anhydride, halogenated paraffins, diphenyl oxide with different bromination degrees, ammonium sulfate, ammonium sulfamate, and so forth, are suitable for the intended purpose. Ammonium sulfate, ammonium sulfamate, ammonium polyphosphate, guanidinium phosphate and melamine pyrophosphate are particularly advantageous.

Other useable flame retardants are aluminium bydroxide, antimony oxide, ammonium perborate, ammonium octamolybdate, and so forth.

For particular applications, the presence may be required in the foamed particles of repellent substances to rodents, which can be added to the mixture used for preparing the foamed particles, or can be added to the foamed particles as active principle containing microcapsules, or as a masterbatch, in particular in combination with the nucleation agents and/or flame retardants.

For that purpose, such substances as N,N-diethyl-m-toluamide, diethylphenyl acetamide, 2-decanal, ammonium chloride, potassium chlorate, terpenoids, cycloheximide, diguanidinoazaheptadecane, and so on, can be used. Terpenoids, and, in particular, menthol and limonene are preferred.

When used, these repellents are present in amounts comprised within the range of from 0.1 to 5% by weight, preferably comprised within the range of from 1 to 3 % by weight.

The foamed particles which constitute the foamed article of the invention can be prepared by means of a process of extrusion of the starch based composition, carried out by means of a single screw or twin screw extruder.

Such an extrusion process, carried out in the presence of a further water amount comprised within the range of from 5 to 20 % by weight, causes the starch contained in the composition to get destructured. However, water content should be controlled by means of a venting system, so as to have a total water content at the nozzle, comprised within the range of from 5 to 20 % by weight.

As an alternative, granules can be used of a thermoplastic starch previously destructured according to such methodologies as known, e.g., from published International Patent Application WO 92/02363 and WO 92/14782, the contents of which are incorporated by reference to the instant application.

The above said extrusion processes are carried out at temperatures generally comprised within the range of from 150 to 250 °C, with residence times generally of from 20 seconds to 15 minutes. The noodle cutting (pelletizing) downstream of the extruder head is carried out at a high speed, so that the molten material is cut when it is not yet solidified and therefore the resulting particles (pellets) turn into substantially spherical particles. The shear values at extruder head generally are higher than 1000 s⁻¹, preferably higher than 3000 s⁻¹.

Another route to prepare the foamed particles consists of a treatment of compressing/depressurizing non-foamed particles having a size comprise within the range of from 20 µm to 1 mm, as diameter. Said non-foamed particles can be obtained, e.g., by extrusion through multi-bore dies and subsequent head cutting, of by grinding larger-size granules. These non-foamed particles are submitted to a pressure comprised within the range of from 2 to 100 bars, in the presence of moisture in equilibrium with water contained in the material, at temperature comprised within the range of from 40 to 200 °C, followed by a fast depressurizing.

Still another method for preparing the foamed particles consists in submitting the above type of non-foamed particles to a heating treatment by microwaves.

The foamed articles of biodegradable plastic material according to the present invention can be prepared by means of a process of agglomeration of foamed particles of the above said material.

Therefore, a further object of the present invention is a process for producing foamed articles made of biodegradable plastic material, which process comprises the steps of:
- submitting foamed particles having a density comprised within the range of from 0.1 to 0.005 g/cm³ and a size comprised within the range of from 0.5 to 10 mm of diameter with said particles being constituted by a material comprising:
   - from 50 to 95 %, by weight, preferably from 60 to 95 % by weight, of thermoplastic starch,
   - from 0.5 to 45 %, by weight, preferably from 2 to 35 % by weight, of at least one thermoplastic polymer, and
- from 2 to 20 %, by weight, preferably from 5 to 17 % by weight, of water, to a heat treatment and/or to a treatment with at least one polymeric coating agent in order to modify the surface of said particles, rendering them capable of stably interacting with each other when they are caused to come into mutual intimate contact; and
- subsequently, keeping said foamed particles into intimate contact with one another, during a long enough time to cause them to agglomerate.

The good resilience properties of the foamed particles enable them to withstand any collapsing phenomena when they are brought into an intimate contact state.

Coating agents useable in the process according to the present invention are, e.g.:
i. aqueous solutions, suspension and/or emulsion of either natural or synthetic, polymeric or monomeric substances, or said substances in the molten state;
ii. polymers with melting point of <130 °C, preferably of <90 °C.

Examples of coating agents which can be used in aqueous solution, suspension or emulsion in the process of the present invention are:
- poly(vinyl acetate);
- poly(vinyl butyrate);
- copolymers of vinyl acetate or vinyl butyrate with one or more monomer(s) selected from vinyl esters, acrylates, methacrylates, allyl derivatives, pyridinium salts, acrylonitrile, acrylamide, vinyl pyrrolidone, vinyl pyridine, vinyl imidazoles, which can possibly be either partially or totally hydrolysed;
- poly(vinyl acetate) or poly(vinyl butyrate) grafted with aliphatic polyesters, such as polycaprolactone, or lactic acid polymers;
- high- or low-hydrolysis-degree poly(vinyl alcohol), possibly pre-treated with plasticizers and/or admixed with gelation agents, such as, e.g., boric acid, borates, titanates;
- poly(vinyl alcohol) modified by acetalization, etherification, esterification;
- block copolymers of poly(vinyl alcohol) with poly(vinyl acetate or styrene);
- fatty acid capped poly(vinyl alcohol);
- poly(vinyl alcohol) grafted with polyoxyethylene and/or polyoxypropylene;
- casein and caseinates;
- alkyl cellulose, hydroxyalkyl cellulose and cellulose esters, such as cellulose acetate and carboxymethyl cellulose, possibly plasticized and/or modified with aliphatic esters, as caprolactone;
- natural rubber latex;
- natural gums (vegetable hydrocolloids), such as gum arabic, possibly grafted with acrylamide, acrylonitrile, styrene or acrylic esters;
- alginic acid, alginates, abietinic acid, rosin resin, agar-agar, guar gum, carrageenin, xanthan gum, pullulan, chitosans, shellac, animal gelatins, proteins, emulsifiers, dispersants, fillers;
- ammonium or sodium salts of ionomeric polymers derived from poly(acrylic acid), ethylene/acrylic acid copolymers, acrylamide/acrylic acid copolymers, poly(styrene sulfonic acid);
- homo- and co-polymers of prevailingly aliphatic character, in particular polyurethanes, polyamides, polyesters, such as poly(caprolactone), poly(lactic acid), poly(hydroxybutyrate-valerate), poly(butanediol succinate), and their copolymers with partially substituted polyfunctional alcohols.

Among the above listed substances, poly(vinyl acetate) is particularly suitable for use in coating agents in the process according to the present invention.

The process for preparing the foamed articles of the present invention preferably comprises a step of:
- thermal and/or aeration treatment prior to, simultaneously with, or subsequently to, the step of bringing the particles into intimate contact, in order to facilitate the evaporation of the liquid substances and/or the polymerization of the monomeric substances contained in the coating agent.

The resulting foamed articles can be suitably submitted to a further post-drying treatment.

This post-drying treatment, which makes it possible any possible residual water or solvents to be removed, can be carried out in a dry, humid or conditioned environment. In the event that the coating agent comprises a monomeric substance capable of polymerizing, said post-treatment can furthermore be used in order to bring the polymerization reaction and/or particles agglomeration to its completion. Said post-drying treatment step can furthermore secure a stabilization of the shape of the obtained articles of manufacture.

In the event that the coating agent is used in an emulsion form, this can contain emulsifier agents and/or thickeners in amounts comprised within the range of from 0.05 to 3 % by weight, preferably comprised within the range of from 0.1 to 2 % by weight, still more preferably of from 0.2 to 1 % by weight.

Useable emulsifier agents are, e.g., the surfactants with a hydrophile/lipophile balance index (HLB) comprised within the range of from 3 to 25, preferably of from 6 to 20. Particularly effective surfactants are those which derive from polyoxyethylene or polyoxypropylene, either by directly esterifying them with fatty acids, such as, e.g., polyoxyethylenes (4-20 mol) esterified with lauric, palmitic or stearic acid, or by esterifying polyoxyethylated sugars with fatty acids, such as, e.g., oxyethylated (4-20 mol) sorbitols esterified with 1-6 mol of fatty acid. Useable surfactants furthermore are oxyethylates nonylphenols, lanolin ethers and esters, tri-ethanolamine oleates, polyglycerol esters of fatty acids, polyoxyethylene ethers with fatty alcohols, such as, e.g., stearyl alcohol, cetyl alcohol or cholesterol, PEG-tallow amine, PEG-castor oil.

Thickening agents which can be used are, e.g., sodium carboxymethylcellulose, methyl cellulose, natural rubbers, clays, and so forth.

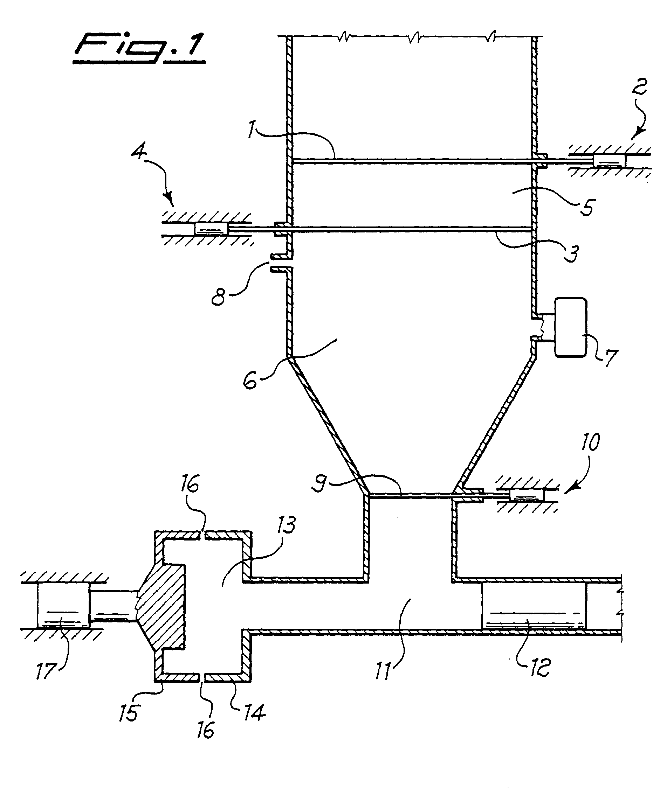

According to a preferred embodiment, the process according to the present invention can be suitably carried out by using a type of apparatus like the one shown in Figure 1.

Referring to the drawing of Figure 1, the reference numerals (1), (3) and (9) indicate slidable separation walls which are pneumatically driven by means of the opening/closure system indicated with (2), (4) and (10), respectively.

With the separation wall (1) open, the foamed particles are charged to the metering chamber (5); the wall (1) is then closed and, by opening the separation wall (3), the particles are caused to fall into the atomization chamber (6); the separation wall (3) is then closed and the atomizer unit 7, containing the coating agent, is started-up and is made operate during a long enough time period in order to cause the chamber (6) to become saturated with the coating agent; now, the atomizer (7) is stopped and, by opening the separation wall (9), the particles are caused to fall into the duct (11); the female and male portions (14) and (15), respectively, of the mould, are kept in such a position that the width of the air gap (16) between them is smaller than the diameter of the pellets; the separation wall (9) is them closed and, by means of the piston (12), the particles are fed to the mould inside which they are submitted to pressure; the mould if finally opened by means of the piston (17), in order to recover the manufactured articles obtained.

According to another preferred embodiment, the process of the present invention can be suitably carried out by submitting the foamed particles to the treatment with the coating agent, directly along the feed channel to the forming chamber in an apparatus like those used to sinter foamed polystyrene particles (mould with venting openings).

Finally, the coating agent can be suitably fed directly through the bores of the mould, after charging the foamed particles to the latter.

The following Examples are supplied fro merely illustrative purposes and are not limitative of the invention.

### Characterization

### Resilience Test

This test is used in order to measure the material capability of recovering its initial shape after being submitted to the action of a force which caused it to get deformed.

A cylindrical container of 125 mm of diameter and 150 mm of height is filled with foamed particles, which are squeezed by the flat sensor of a force gauge, moving forwards with the speed of 25 mm/minute. The sensor presses the particles by 33 % of cylinder height, then returns back to its starting position. One minute later, the sensor performs a second particle compression treatment, according to the same modalities as of the first one.

The resilience value, reported as a % value, is the ratio of the applied force for the first compression stroke, divided by the applied force for the second compression stroke, times 100.

| Density | |
|---|---|
| Dₐₚₚ (Kg/cm³) | Bulk density of foamed particles, calculated from the weight of a 5-litre volume of particles; |
| d_{bulk} (Kg/cm³) | Pycnometric density of the individual foamed particles; |
| dₑₓₚ (Kg/m³) | Pycnometric density of the foamed article of manufacture. |

### EXAMPLE 1

A mixture was prepared with the following composition:
- 75 %, by weight, of potato starch;
- 10 %, by weight, of poly(vinyl alcohol) with the hydrolysis degree of 86%; and
- 15 %, by weight, of water.

This composition was fed to a twin-screw extruded APV 2030 with diameter (d) = 30 mm and length:diameter ratio [(L)/(d)] = 30. The operating conditions were as follows:
- screw revolution speed (rpm) = 150:
- temperature profile: 69 °C/100 °C/180 °C/170 °C/155 °C;
- extruder throughput: 10 Kg/h.

The vent was so adjusted as to keep a total water content of about 14 %.

The so obtained pellets, together with 0.5 % of talc with average particles diameter of about 1.5 µm, were fed to a single-screw extruder ex OMC, with diameter (d) = 40 mm and length:diameter ratio [(L)/(d)] = 28, equipped with an extruder head with 4 nozzles with diameter (d) = 0.8 mm and length:diameter ratio [(L)/)d)]<1.

The operating conditions were as follows:
- screw revolution speed (rpm) =40;
- temperature profile: 80°C/120°C/190°C/190°C/200°C;
- extruder throughput: 52 Kg/h.
- head cutting blade revolution speed: 4,000 rpm.

Pellets of foamed material were obtained, the characteristics of which are reported in Table 1.

### EXAMPLE 2

The operating procedure was the same as of Example 1, but a mixture with the following composition was used:
- 64 %, by weight, of potato starch;
- 25 %, by weight, of EVOH containing 44 % % of ethylene units by mol, with hydrolysis degree of 99.8 %, and Mw = 70,000;
- 10 %, by weight, of water; and
- 1 %, by weight, of glycerol monooleate.

The water content in the pellet is of approximately 10 %. The characteristics of the foamed pellet are reported in Table 1.

### EXAMPLE 3

The operating procedure was the same as of Example 1, but a mixture with the following composition was used:
- 78 %, by weight, of potato starch;
- 7 %, by weight, of EVOH containing 44 % of ethylene units by mol, hydrolysis degree of 99.8 %, and mw = 70,000;
- 8 %, by weight, of poly(vinyl alcohol with hydrolysis degree of 86 %;
- 6 %, by weight, of water; and
- 1 %, by weight, of glycerol monooleate.

The water content in the pellet is of approximately 12 %. The characteristics of the foamed pellet are reported in Table 1.

### EXAMPLE 4

The operating procedure was the same as of example 1, but a mixture with the following composition was used:
- 69 %, by weight, of potato starch;
- 10 %, by weight, of polycaprolactone UC PCL 787;
- 5 %, by weight, of Pellethane (trademark) (2102-85AE9, a caprolactone-urethane block copolymer;
- 15 %, by weight, of water; and
- 1 %, by weight, of glycerol monooleate.

The water content in the pellet is of approximately 10 %. The characteristics of the foamed pellet are reported in Table 1.

### EXAMPLE 5

The operating procedure was the same as of Example 1, but a mixture with the following composition was used:
- 75 %, by weight, of potato starch;
- 10 %, by weight, of a Dow Chemical's ethylene-acrylic acid copolymer containing 20 % of acrylic units by mol; and
- 15 %, by weight, of water.

The water content in the pellet is of approximately 10 %. the characteristics of the foamed pellet are reported in Table 1.

### EXAMPLE 6

The operating procedure was the same as of Example 1, but a mixture with the following composition was used:
- 75 %, by weight, of potato starch;
- 10 %, by weight, of cellulose acetate with substitution degree 2.5, plasticized with 20% caprolactone; and
- 15 %, by weight, of water.

The water content in the pellet is of approximately 12 %. The characteristics of the foamed pellet are reported in Table 1.

### EXAMPLE 7

The metering chamber 5 of the apparatus illustrated in Figure 1, of 2 litres of volume, was filled with foamed particles obtained from Example 3.

Then, by following the above specified procedure, the pellets were treated with a Vinavil NPC (trademark) emulsion (from Enichem Synthesis) containing 50 % poly(vinyl acetate), atomized by means of the atomizer unit 7.

The resulting manufactured articles was submitted to a post-drying treatment inside a chamber conditioned at 23 °C and relative humidity (RH) = 30 % during 15 hours.

The characteristics of the foamed product are reported in Table 2.

### EXAMPLE 8

The operating procedure was the same as used in Example 7, but this time Vinavil NPC emulsion (from Enichem Synthesis) was used diluted 1:10 with water (water:Vinavil).

The characteristics of the foamed product are reported in Table 2.

### EXAMPLE 9

The operating procedure was the same as used in Example 7, but this time Vinavil NPC emulsion (from Enichem Synthesys) was used diluted 1:5 with water (water:Vinavil).

The characteristics of the foamed product are reported in Table 2.

### EXAMPLE 10

The operating procedure was the same as used in Example 7, but this time Vinavil NPC emulsion (from Enichem Synthesys) was used diluted 1:2 with water (water:Vinavil).

The characteristics of the foamed product are reported in Table 2.

### EXAMPLE 11

The operating procedure was the same as used in Example 10, but with the difference that the foamed pellets used are those obtained from Example 2.

The characteristics of the foamed product are reported in Table 2.

### EXAMPLE 12

The operating procedure was the same as used in Example 10, but with the difference that the foamed pellets used are those obtained from Example 1.

The characteristics of the foamed product are reported in Table 2.

### EXAMPLE 13

The operating procedure was the same as used in Example 10, but with the difference that the post-drying treatment was carried out inside a chamber conditioned at 23 °C and relative humidity (RH) = 55 % during 15 hours.

The characteristics of the foamed product are reported in Table 2.

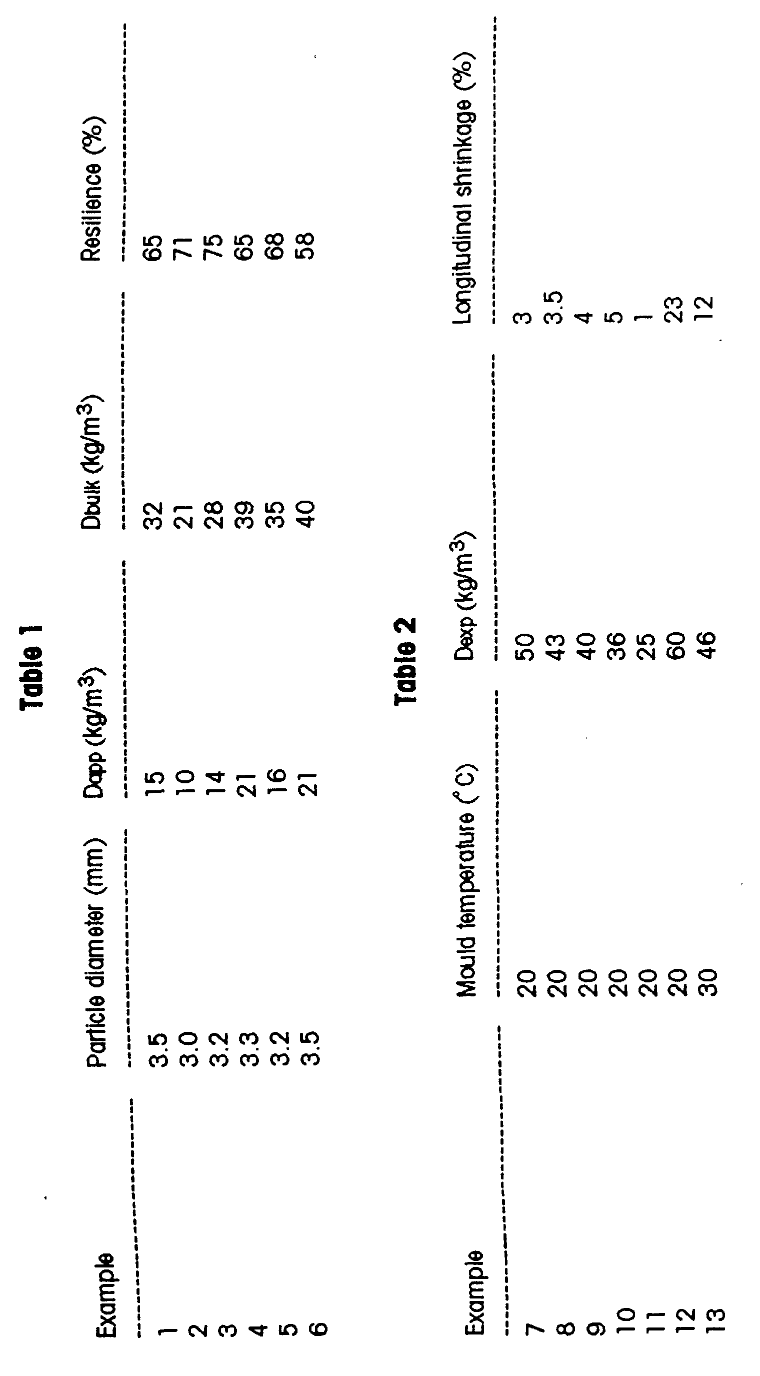

## Claims

1. Foamed material made of a biodegradable plastic material, constituted by agglomerated foamed particles, constituted by a material comprising:
- from 50 to 95% by wt. of thermoplastic starch,
- from 0.5 to 45% by wt. of at least one thermoplastic polymer other than starch, and
- from 2 to 20% by wt. of water,
**characterised in that** the particles have a density comprised within the range of 0.1 to 0.003 g/cm³ and a size comprised within the range of from 0.5 to 10 mm of diameter and **in that** said particles have the surface modified with a polymeric coating agent.

2. Foamed article according to claim 1, in which the thermoplastic polymer other than starch is selected from polymer from
i. natural origin, either modified or non-modified, in particular cellulose derivatives;
ii. biodegradable polymers of synthetic origin, or obtained by fermentation, in particular polyesters;
iii. polymers capable of forming "V" type complexes with amylose, or polymers containing hydrophilic groups intercalated with hydrophobic sequences,
iv. polymers capable of forming hydrogen bonds with starch.

3. Foamed article according to claim 2, in which the thermoplastic polymer other than starch is selected from polyvinylalcohol, the copolymers of an olefinic monomer with a monomer selected from vinylalcohol, vinylacetate, acrylic acid and methacrylic acid, aliphatic polyesters and aliphatic polyamides.

4. Foamed articles according to claim 3, in which the olefinic monomer is ethylene.

5. Foamed articles according to claim 3, in which the aliphatic polyester is selected from polycaprolactone, poly(butylene succinate) and their copolymers.

6. Foamed articles according to claim 2 in which the polymer capable of forming "V" type complexes with amylose or containing hydrophilic groups intercalated with hydrophobic sequences is selected from polyurethane-polyester, polyurethane-polyether and polyester-polyether copolymers.

7. Foamed articles according to any of claims 1 to 6, in which the material which constitutes the foamed particles comprises from 0.005 to 5% by wt. of at least one nucleation agent.

8. Foamed articles according to claim 7, in which the nucleating agent is selected from talc, calcium carbonate, yeast shells from sugar beet processing, dried, ground and powdered sugar beet flesh, wood powder and cellulose powder.

9. Foamed articles according to any of claims 1 to 8, in which the material which constitutes the foamed particles comprises from 0.01 to 5% by wt. of at least one slip agent and/or a dispersing agent with a hydrophile lipophile balance index ("HLB") comprised within the range of from 3 to 25.

10. Foamed articles according to any of claims from 1 to 9, in which the material which constitutes the foamed particles comprises from 0.5 to 20% by wt. of at least one plasticizer agent.

11. Foamed articles according to claim 10, in which the plascicizer agent is selected from glycerol, sorbitol, mannitol, erythritol, low-molecular-weight poly(vinyl alcohol), oxyethylated and oxypropylated derivatives of said compounds and urea.

12. Process for producing foamed articles by agglomeration of foamed particles, constituted by a material comprising:
- from 50 to 95% by wt. of thermoplastic starch,
- from 0.5 to 45% by wt. of at least one thermoplastic polymer other than starch, and
- from 2 to 20% by wt. of water,
**characterised in that** it comprises the steps of:
- submitting foamed particles having a density comprised within the range of from 0.1 to 0.003 g/cm³ and a size comprised within the range of from 0.5 to 10 mm of diameter to a treatment with at least one polymeric coating agent, in order to modify the surface of said particles, rendering them capable of interacting with each other when they are caused to come into mutual intimate contact; and
- subsequently, keeping said foamed particles into intimate contact with one ancther, to cause them to agglomerate.

13. Process according to claim 12, in which the coating agent is selected from:
aqueous solutions, suspensions and/or emulsions of either natural or synthetic, polymeric substances or monomeric substances capable of polymerising.

14. Process according to claim 13, in which the coating agent contains polyvinylacetate.

15. Process according to any of claims 12 to 14, comprising a step of:
- heat treatment and/or aeration treatment, which may be carried out prior to, simultaneously with, or later than, the step of bringing the particles into mutual intimate contact, in order to facilitate the evaporation of the liquid substances and/or the polymerisation of the monomeric substances present in the coating agent.

16. Process according to any of claims 12 to 15, comprising a post-drying treatment consisting in drying the obtained foamed article in a dry, humid, or conditioned environment.

17. Foamed particles constituted by a material comprising:
- from 50 to 95% by wt of thermoplastic starch,
- from 0.5 to % by wt. of a thermoplastic polymer other than starch; and
- from 2 to 20% by wt of water, said particles being
**characterised in that** they ara coated with a polymeric coating agent capable of agglomerating the particles when they are caused to come into mutual contact and **in that** they have a density from 0.1 to 0.003 g/cm³ and do not contain a liquid substance or a monomeric substance deriving from the coating agent.

18. Foamed particles according to claim 17, wherein the coating agent is selected from pelyvinylacetata, polyurethanes and polyesters.

## Patentansprüche

1. Geschäumtes Material, hergestellt aus biologisch abbaubaren Kunststoffmaterial, das aus agglomerierten, geschäumten Teilchen besteht, gebildet durch ein Material, das
- 50 bis 95 Gew.-% thermoplastische Stärke
- 0,5 bis 45 Gew.-% zumindest eines thermoplastischen Polymers, das keine Stärke ist, und
- 2 bis 20 Gew.-% Wasser
umfasst, **dadurch gekennzeichnet, dass** die Teilchen eine Dichte innerhalb eines Bereiches von 0,1 bis 0,003 g/cm³ und eine Größe im Durchmesserbereich von 0,5 bis 10 mm haben und dass die Teilchen eine mit einem polymeren Beschichtungsmittel modifizierte Oberfläche aufweisen.

2. Geschäumter Artikel nach Anspruch 1, wobei das thermoplastische Polymer, das keine Stärke ist, aus
i. Polymeren natürlichen Usprungs, entweder modifiziert oder nicht modifiziert, insbesondere Cellulose-Derivate;
ii. biologisch abbaubaren Polymeren synthetischen Ursprungs oder durch Fermentation erhalten, insbesondere Polyester;
iii. Polymeren mit der Fähigkeit, "V"-artige Komplexe mit Amylose bilden zu können, oder aus Polymeren, die hydrophile Gruppen mit eingeschobenen hydrophoben Sequenzen enthalten;
iv. Polymeren mit der Fähigkeit, Wasserstoffbindungen mit Stärke zu bilden
ausgewählt ist.

3. Geschäumter Artikel nach Anspruch 2, wobei das thermoplastische Polymer, das keine Stärke ist, aus Polyvinylalkohol, den Copolymeren eines olefinischen Monomers ausgewählt ist, mit einem Monomer, das aus Vinylalkohol, Vinylacetat, Acrylsäure und Methacrylsäure, aliphatischen Polyestern und aliphatischen Polyamiden ausgewählt ist.

4. Geschäumte Artikel nach Anspruch 3, wobei das olefinische Monomer Ethylen ist.

5. Geschäumte Artikel nach Anspruch 3, wobei der aliphatische Polyester aus Polycaprolacton, Poly(butylensuccinat) und ihren Copolymeren ausgewählt ist.

6. Geschäumte Artikel nach Anspruch 2, wobei das Polymer, das "V"-artige Komplexe mit Amylose bilden oder hydrophile Gruppen mit eingeschobenen hydrophoben Sequenzen enthalten kann, aus Polyurethan-Polyester, Polyurethan-Polyether und Polyester-Polyether-Copolymeren ausgewählt ist.

7. Geschäumte Artikel nach jedem der Ansprüche 1 bis 6, wobei das Material, aus dem die geschäumten Teilchen bestehen, 0,005 bis zu 5 Gew.-% von zumindest einem Kristallisationsmittel umfasst.

8. Geschäumte Artikel nach Anspruch 7, wobei das Kristallisationsmittel aus Talk, Calciumcarbonat, Hefeschalen von Zuckerrübenverfahren, getrocknetem, gemahlenen und gepulverten Zuckerrübenfleisch, Holzpulver und Cellulosepulver ausgewählt ist.

9. Geschäumte Artikel nach jedem der Ansprüche 1 bis 8, wobei das Material, aus dem die geschäumten Teilchen bestehen, 0,01 bis 5 Gew.-% von zumindest einem Gleitmittel und/oder einem Dispergiermittel mit einem Hydrophil-, Lipophil- Verhältnisindex ("HLB") innerhalb des Bereiches von 3 bis 25 umfasst.

10. Geschäumte Artikel nach jedem der Ansprüche 1 bis 9, wobei das Material; aus dem die geschäumten Teilchen bestehen, 0,5 bis 20 Gew.-% von zumindest einem Plastifiziermittel umfasst.

11. Geschäumte Artikel nach Anspruch 10, wobei das Plastifiziermittel aus Glyzerin, Sorbit, Mannit, Erythrit, niedermolekularem Poly(Vinylalkohol), oxyethylierten und oxypropylierten Derivaten der genannten Verbindungen und Harnstoff ausgewählt ist.

12. Verfahren zur Herstellung von geschäumten Artikeln durch Agglomerieren der geschäumten Teilchen, bestehend aus einem Material, das
- 50 bis 95 Gew.-% einer thermoplastischen Stärke,
- 0,5 bis 45 Gew.-% von zumindest einem thermoplastischen Polymer, das keine Stärke ist, und
- 2 bis 20 Gew.-% Wasser
umfasst, **dadurch gekennzeichnet, dass** es die Schritte umfasst:
- Unterziehen von geschäumten Teilchen, die eine Dichte innerhalb des Bereiches von 0,1 bis 0,003 g/cm³ und eine Größe innerhalb des Durchmesserbereiches von 0,5 bis 10 mm aufweisen, einer Behandlung, mit zumindest einem polymeren. Beschichtungsmittel, um die Oberfläche der Teilchen zu modifizieren, wobei sie befähigt werden, aufeinander gegenseitig einzuwirken, wenn sie in wechselseitigen, intensiven Kontakt gebracht werden; und
- anschließend, Halten der geschäumten Teilchen in gegenseitigem, intensiven Kontakt, um ihr Agglomerieren zu bewirken.

13. Verfahren nach Anspruch 12, wobei das Beschichtungsmittel aus wässrigen Lösungen, Suspensionen und/oder Emulsionen von entweder natürlichen oder synthetischen, polymeren Substanzen oder monomeren Substanzen mit der Fähigkeit zur Polymerisation ausgewählt ist.

14. Verfahren nach Anspruch 13, wobei das Beschichtungsmittel Polyvinylacecat enthält.

15. Verfahren nach jedem der Ansprüche 12 bis 14, das den Schritt einer
- Wärmebehandlung und/oder Luftbehandlung, welche vor, gleichzeitig mit oder nach der Phase, bei der die Teilchen in gegenseitigen, intensiven Kontakt gebracht werden, ausgeführt werden kann, um die Evaporation der flüssigen Substanzen und/oder die Polymerisation der monomeren Substanzen, die im Beschichtungsmittel gegenwärtig sind, zu vereinfachen,
umfasst.

16. Verfahren nach jedem der Ansprüche 12 bis 15, welches eine Nach-Trockenbehandlung umfasst, das ein Trocknen des erhaltenen, geschäumten Artikels in einer trockenen, feuchten oder klimatisierten Umgebung umfasst.

17. Geschäumte Teilchen, bestehend aus einem Material, das
- 50 bis 95 Gew.-% thermoplastische Stärke,
- 0,5 bis 45 Gew.-% eines thermoplastischen Polymers, das keine Stärke ist, und
- 2 bis 20 Gew.-% Wasser
umfasst, wobei die Teilchen **dadurch gekennzeichnet sind, dass** sie mit einem polymeren Beschichtungsmittel mit der Fähigkeit, die Teilchen zu agglomerieren, wenn sie in wechselseitigen Kontakt gebracht werden, beschichtet sind und dass sie eine Dichte im Bereich von 0,1 bis 0,003 g/cm³ aufweisen und keine flüssige Substanz oder eine monomere Substanz, deriviert vom Beschichtungsmittel, enthalten.

18. Geschäumte Teilchen nach Anspruch 17, wobei das Beschichtungsmittel aus Polyvinylacetat, Polyurethanen und Polyestern ausgewählt ist.

## Revendications

1. Matériau alvéolaire fait de matière plastique biodégradable, composé de particules alvéolaires agglomérées, constituées par un matériau comprenant :
- entre 50 et 95 % en poids d'amidon thermoplastique,
- entre 0,5 et 45 % en poids d'au moins un polymère thermoplastique autre que l'amidon, et
- entre 2 et 20 % en poids d'eau,
**caractérisé en ce que** les particules ont une masse volumique située dans la gamme de 0,1 à 0,003 g/cm³ et une taille située dans la gamme de 0,5 à 10 mm de diamètre et **en ce que** lesdites particules ont leur surface transformée par un polymère d'enrobage.

2. Produit alvéolaire selon la revendication 1, dans lequel le polymère thermoplastique autre que l'amidon est choisi parmi
i. des polymères d'origine naturelle, soit transformés soit non-transformés, notamment les dérivés cellulosiques ;
ii. des polymères biodégradables d'origine synthétique ou obtenus par fermentation, notamment les polyesters ;
iii. des polymères capables de former des complexes en «V» avec l'amylose, ou des polymères contenant des groupes hydrophiles alternés avec des séquences hydrophobes,
iv. des polymères capables de former des liaisons hydrogènes avec l'amidon.

3. Produit alvéolaire selon la revendication 2, dans lequel le polymère thermoplastique autre que l'amidon est choisi parmi l'alcool polyvinylique, les copolymères d'un monomère oléfinique, avec un monomère choisi parmi l'alcool de vinyle, l'acétate de vinyle, l'acide acrylique et l'acide méthacrylique, les polyesters aliphatiques et les polyamides aliphatiques.

4. Produits alvéolaires selon la revendication 3, dans lesquels le monomère oléfinique est l'éthylène.

5. Produits alvéolaires selon la revendication 3, dans lesquels le polyester aliphatique est choisi parmi le polycaprolactone, le poly(succinate de butylène) et leurs copolymères.

6. Produits alvéolaires selon la revendication 2, dans lesquels le polymère capable de former des complexes en «V» avec l'amylose ou contenant des groupes hydrophiles alternés avec des séquences hydrophobes, est choisi parmi le polyuréthanne-polyester, le polyuréthanne-polyéther et les copolymères polyester-polyéther.

7. Produits alvéolaires selon l'une quelconque des revendications 1 à 6, dans lesquels le matériau qui compose les particules alvéolaires comprend entre 0,005 et 5 % en poids d'au moins un agent de nucléation.

8. Produits alvéolaires selon la revendication 7, dans lesquels l'agent de nucléation est choisi parmi le talc, le carbonate de calcium, les parois des levures issues de la transformation de la betterave sucrière, la pulpe de betterave sucrière séchée, moulue et pulvérisée, la poudre de bois et la poudre de cellulose.

9. Produits alvéolaires selon l'une quelconque des revendications 1 à 8, dans lesquels le matériau qui compose les particules alvéolaires comprend entre 0,01 et 5 % en poids d'au moins un agent glissant et/ou un agent dispersant avec un rapport hydrophile-lipophile (« HLB ») situé dans la gamme de 3 à 25.

10. Produits alvéolaires selon l'une quelconque des revendications 1 à 9, dans lesquels le matériau qui compose les particules alvéolaires comprend entre 0,5 et 20 % en poids d'au moins un agent plastifiant.

11. Produits alvéolaires selon la revendication 10, dans lesquels l'agent plastifiant est choisi parmi le glycérol, le sorbitol, le mannitol, l'érythritol, l'alcoolpolyvinylique de faible masse moléculaire, les dérivés oxyéthylés et oxypropylés desdits composés et l'urée.

12. Procédé pour la fabrication de produits alvéolaires par agglomération de particules alvéolaires, constituées d'un matériau comprenant :
- entre 50 et 95 % en poids d'amidon thermoplastique,
- entre 0,5 et 45 % en poids d'au moins un polymère thermoplastique autre que l'amidon, et
- entre 2 et 20 % en poids d'eau,
**caractérisé en ce qu'**il comprend les étapes suivantes :
- on soumet les particules alvéolaires ayant une masse volumique comprise dans la gamme de 0,1 à 0,003 g/cm³ et une taille comprise dans la gamme de 0,5 à 10 mm de diamètre, à un traitement avec au moins un agent polymérique d'enrobage, afin de transformer la surface desdites particules, les rendant capables d'interagir entre elles quand on les fait entrer en contact étroit ; et
- par la suite, on maintient lesdites particules alvéolaires en contact étroit entre elles, pour les faire agglomérer.

13. Procédé selon la revendication 12, dans lequel l'agent d'enrobage est choisi parmi :
des solutions aqueuses, des suspensions et/ou émulsions de substances polymériques soit naturels soit synthétiques ou de substances monomériques capables de polymériser.

14. Procédé selon la revendication 13, dans lequel l'agent d'enrobage contient du poly(acétate de vinyle).

15. Procédé selon l'une quelconque des revendications 12 à 14, comprenant une étape de :
- traitement thermique et/ou d'aération, qui peut être effectué avant, pendant ou après l'étape de mise en contact étroit des particules entre elles, pour faciliter l'évaporation des substances liquides et/ou la polymérisation des substances monomériques présents dans l'agent d'enrobage.

16. Procédé selon l'une quelconque des revendications 12 à 15, comprenant un traitement après séchage consistant à sécher le produit alvéolaire obtenu dans un environnement sec, humide ou conditionné.

17. Particules alvéolaires constituées d'une matière comprenant :
- entre 50 et 95 % en poids d'amidon thermoplastique,
- entre 0,5 et 45 % en poids de polymère thermoplastique autre que l'amidon ; et
- entre 2 et 20 % en poids d'eau, lesdites particules étant **caractérisées en ce qu'**elles sont enrobées d'un agent polymérique d'enrobage capable d'agglomérer les particules quand on les fait entrer en contact entre elles et **en ce qu'**elles ont une masse volumique comprise entre 0,1 et 0,003 g/cm³ et **en ce qu'**elles ne contiennent pas de substance liquide ou de substance monomérique provenant de l'agent d'enrobage.

18. Particules alvéolaires selon la revendication 17, dans lesquelles l'agent d'enrobage est choisi parmi le poly(acétate de vinyle), les polyuréthanes et les polyesters.
